# EUROPÄISCHE PATENTSCHRIFT

(11) **EP 0 964 168 B1**
(45) Veröffentlichungstag und Bekanntmachung des Hinweises auf die Patenterteilung: **19.03.2008**
(21) Anmeldenummer: 99810475.6
(22) Anmeldetag: 01.06.1999
(51) Int. Cl.: F16B 13/08

(54) **Hinterschnittdübel**
Undercut anchor
Ancre à contre-dépouille

(30) Priorität: 10.06.1998 DE 19825884
(43) Veröffentlichungstag der Anmeldung: 15.12.1999
(73) Patentinhaber: HILTI Aktiengesellschaft, 9494 Schaan (LI)
(72) Erfinder: Kaibach, Werner, 86807 Buchloe (DE); Negele, Hans-Jürgen, 86920 Denklingen (DE); Raber, Stefan, 86916 Kaufering (DE)
(74) Vertreter: Wildi, Roland

(56) Entgegenhaltungen:
- EP-A- 0 217 053
- GB-A- 2 190 164
- US-A- 4 246 688
- US-A- 4 797 044
- US-A- 4 940 372

## Beschreibung

Die Erfindung betrifft einen Hinterschnittdübel mit einer Ankerstange und einer Spreizhülse mit radial ausstellbaren Spreizlappen gemäss dem Oberbegriff des Patentanspruchs 1.

In Befestigungsanwendungen, bei denen geringe Achs- und Randabstände eingehalten werden müssen, kommen formschlüssig verankernde Befestigungssysteme zur Anwendung. Neben der Möglichkeit, einen Kopfbolzen durch Eingiessen im Untergrund zu verankern, werden derartige abstandskritische Befestigungen auch mit Hinterschnittsystemen erstellt. Ein bekannte Art der gattungsgemässen Hinterschnittdübel ist in Bohrungen verankerbar, in denen mit Hilfe eines Spezialwerkzeugs in der Nähe des Bohrlochgrunds eine Hinterschneidung vorbereitet ist. Dazu wird die Ankerstange mit aufgesetzter Spreizhülse in die Bohrung eingesetzt, und die Spreizlappen der Spreizhülse werden durch eine Relativverschiebung zwischen der Hülse und der Ankerstange radial ausgestellt. Die in die Hinterschneidung ausgestellten Spreizlappen bilden in der Bohrung eine formschlüssige Verbindung zum Untergrund.

Eine zweite Variante von Hinterschnittdübeln ist ohne spezielle Werkzeuge zur Erstellung der Hinterschneidung verankerbar, da sie sich beim Setzvorgang selbsttätig eine Hinterschneidung in der zylindrischen Bohrung erzeugen. Die Erzeugung der Hinterschneidung erfolgt meist durch eine Rotation der Spreizhülse, während sie durch axiale Schläge auf das sich in Setzrichtung erweiternde Kopfteil aufgetrieben wird. An den Spreizlappen sind Schneiden angeordnet, die während des Setzvorgangs fräsend, meisselnd eine Hinterschneidung in der Bohrung erzeugen. Nach Abschluss des Setzvorgangs bilden die radial ausgestellten Spreizlappen in der gerade erzeugten Hinterschneidung eine formschlüssige Verankerung. Neben diesen bekannten selbstschneidenden Hinterschnittdübeln sind auch Hinterschnittsysteme bekannt, die sich die Hinterschneidung ohne eine Rotation der Spreizhülse, nur durch eine meisselnde Bearbeitung der zylindrischen Bohrlochwandung erzeugen.

Die US 4,797,044 zeigt einen Hinterschnittdübel gemäß dem oberbegriff von Anspruch 1, der in bereits vorbereitete Hinterschneidungen verankert wird. Der Hinterschnittdübel umfasst eine Ankerstange sowie eine Spreizhülse. Die Ankerstange ist an ihrem einen Längsende mit Lastangriffsmitteln ausgestattet und weist am gegenüberliegenden Längsende ein Kopfteil auf, dessen Aussendurchmesser sich zum freien Ende der Ankerstange hin vergrössert. Die Spreizhülse weist eine Zentralbohrung für die Ankerstange auf und umfasst eine Hülse sowie mehrere durch Längsschlitze voneinander getrennte, gleich ausgestaltete Spreizlappen, die durch Auftreiben der Spreizhülse auf das Kopfteil radial ausstellbar sind. Weiter weist die Spreizhülse eine Halteeinrichtung auf, die in Kombination mit einem Halteelement die Spreizlappen in Position hält. Die Halteeinrichtung wird durch einen an dem der Hülse benachbarten Ende der einzelnen Spreizlappen der Spreizhülse angeordneten ersten Versatz und einen an dem Ende der Hülse angeordneten zweiten Versatz gebildet, in welchen der erste Versatz der einzelnen Spreizlappen einführbar ist. Beabstandet zum der Hülse benachbarten Ende weisen die Spreizlappen an der Aussenfläche einen Querschlitz auf, der im zusammengeführten Zustand der Spreizlappen eine radial umlaufende Nut ausbildet. Diese Nut dient einerseits der Aufnahme des Halteelements in Form eines kreisförmigen elastischen Rings zum Halten der Spreizlappen zueinander und andererseits als plastisches Gelenk beim Auftreiben der Spreizhülse. Die Spreizhülse und somit der Hinterschnittanker ist aufwändig in der Herstellung.

Die D2 EP-B-0 217 053 zeigt einen selbstschneidenden Hinterschnittdübel, der eine Ankerstange sowie eine Spreizhülse umfasst. Die Ankerstange ist an ihrem einen Längsende mit Lastangriffsmitteln ausgestattet und weist am gegenüberliegenden Längsende ein Kopfteil auf, dessen Aussendurchmesser sich zum freien Ende der Ankerstange hin vergrössert. Die Spreizhülse weist eine Zentralbohrung für die Ankerstange und durch Längsschlitze voneinander getrennte, einstückig angeformte Spreizlappen auf, die sich von einer radial umlaufenden Nut zum Kopfteil erstrecken und durch Auftreiben der Spreizhülse auf das Kopfteil radial ausstellbar sind.

Hinterschnittdübel, die in bereits vorbereiteten Hinterschneidungen verankert werden, weisen ein sehr steifes Last-Verschiebeverhalten auf und erreichen weitgehend die Leistungsfähigkeit von eingegossenen Kopfbolzen. Allerdings ist der Setzaufwand für diese Art der Hinterschnittdübel relativ hoch. Selbstschneidende Hinterschnittdübel, wie sie beispielsweise in der EP-B-0 217 053 beschrieben sind, weisen demgegenüber einen deutlich verringerten Setzaufwand auf. Dafür ist das Last-Verschiebe-Verhalten dieser Hinterschnittdübel sehr weich und gleicht mehr dem eines konventionellen, kraftschlüssig verankernden Spreizankers als dem eines eingegossenen Kopfbolzens.

Aufgabe der vorliegenden Erfindung ist es, einen Hinterschnittdübel zu schaffen, der ein verbessertes Last-Verschiebe-Verhalten nahe dem eines eingegossenen Kopfbolzens aufweist und gleichzeitig noch einfach und ohne übermässigen Aufwand formschlüssig im Untergrund verankerbar ist.

Die Lösung dieser Aufgaben besteht in einem Hinterschnittdübel, welcher die im kennzeichnenden Abschnitt des Patentanspruchs 1 angeführten Merkmale aufweist. Der erfindungsgemässe Hinterschnittdübel umfasst eine Ankerstange, die an ihrem einen Längsende mit Lastangriffsmitteln ausgestattet ist und am gegenüberliegenden Längsende ein Kopfteil aufweist, dessen Aussendurchmesser sich zum freien Ende der Ankerstange hin vergrössert, und eine Spreizhülse mit einer Zentralbohrung und durch Längsschlitze voneinander getrennten einstückig angeformten, Spreizlappen, die sich von einer radial umlaufenden Nut zum Kopfteil erstrecken und durch Auftreiben der Hülse auf das Kopfteil radial ausstellbar sind. In der radial umlaufenden Nut ist ein im wesentlichen ringförmiger Körper angeordnet, der bei ausgestellten Spreizlappen die radial umlaufende Nut im wesentlichen ausfüllt.

Die radial umlaufende Nut stellt eine gezielte Materialschwächung der Spreizhülse dar und bildet für die radial ausstellbaren Spreizlappen ein plastisches Gelenk, damit diese beim Auftreiben der Spreizhülse auf das Kopfteil an einer definierten Stelle ausgelenkt werden. Innerhalb des Bohrlochs ergibt sich im Bereich der umlaufenden Nut zur Bohrlochwandung ein relativ grosser Ringspalt, der sich nachteilig auf das Last-Verschiebe-Verhalten auswirkt. Im verankerten Zustand des Hinterschnittdübels füllt der ringförmige Körper die radial umlaufende Nut im wesentlichen aus. Dadurch wird im Gelenkbereich der Ringspalt zwischen der Spreizhülse und der Bohrlochwandung klein gehalten. Als Ergebnis dieser Massnahme kommt der Hinterschnittdübel in seiner Leistungsfähigkeit nahe an die eines eingegossenen Kopfbolzens heran. Der in der umlaufenden Nut angeordnete ringförmige Körper ist vorzugsweise bereits vormontiert und erschwert oder behindert den Setzvorgang in keiner Weise.

In einer vorteilhaften Variante der Erfindung ist der ringförmige Körper in Bezug auf den grössten Aussendurchmesser s der Spreizhülse derart bemessen, dass für seinen Aussendurchmesser a gilt 0,7 · s ≤ a ≤ 1,2 · s, vorzugsweise 0,8 s ≤ a ≤ 1,1 · s. Innerhalb der gewählten Grenzen für den Aussendurchmesser des ringförmigen Körpers ist eine ausreichende Leistungsfähigkeit des Hinterschnittdübels bezüglich seines Last-Verschiebe-Verhaltens gewährleistet. Bei einem Übermass des Aussendurchmessers des ringförmigen Körpers gegenüber dem grössten Aussendurchmesser der Spreizhülse ergibt sich bereits beim Einschieben des Hinterschnittdübels in ein Bohrloch eine Klemmwirkung, die beispielsweise bei einer Überkopfmontage als Montagesicherung gegen ein Herausfallen des Hinterschnittdübels wirkt. Somit wird durch die erfindungsgemässe Ausbildung des Hinterschnittdübels der Setzvorgang sogar vereinfacht.

Indem der ringförmige Körper eine axiale Höhe h aufweist, für deren Verhältnis zum grössten Aussendurchmesser s der Spreizhülse gilt 0,05 · s ≤ h ≤ 1,5 · s, vorzugsweise 0,1 · s ≤ h ≤ 0,8 · s, werden im verankerten Zustand des Hinterschnittdübels mit radial ausgestellten Spreizlappen auch plastische Gelenke mit grösseren axialen Abmessungen ausgefüllt. Auf diese Weise werden mögliche Schwachstellen der Spreizhülse, die zu einem zu weichen Last-Verschiebe-Verhalten des gesetzten Hinterschnittdübels führen könnten, verhindert.

Der ringförmige Körper weist eine Dicke auf, die im wesentlichen der radialen Tiefe der umlaufenden Nut entspricht. Dabei gilt für den Innendurchmesser d des ringförmigen Körpers 0,5 · s ≤ I ≤ 0,9 · s, wobei s für den grössten Aussendurchmesser der Spreizhülse steht. Der gewählte Innendurchmesserbereich ergibt zusammen mit dem gewählten Aussendurchmesserbereich für jeden Nenndurchmesser des Hinterschnittdübels die Dicke des ringförmigen Körpers, die für die Erzielung eines Last-Verschiebe-Verhaltens, das der Leistungsfähigkeit eines Kopfbolzens entspricht, erforderlich ist.

Der ringförmige Körper kann aus Kunststoff oder aus Metall bestehen. Dies bietet für die Herstellung des Hinterschnittdübels eine ausreichende Flexibilität, um anwendungsspezifische Lösungen anbieten zu können.

Für die Montage des ringförmigen Körpers in der radial umlaufenden Nut der Spreizhülse erweist es sich von Vorteil, wenn entlang seines Umfangs eine Trennstelle vorgesehen ist. Vorzugsweise ist er zusätzlich radial elastisch ausgebildet.

Es ist nicht zwingend erforderlich, dass der ringförmige Körper aus einem Stück besteht. In einer Variante der Erfindung kann der rinförmige Körper auch segmentiert ausgebildet sein. Im Bereich des plastischen Gelenks können dann Halterungen vorgesehen sein, um zu verhindern, dass die Segmente des ringförmigen Körpers aus der umlaufenden Nut fallen. Diese Halterungen können beispielsweise kleine Hinterschneidungen sein oder aus einem elastischen schlauchartigen Teil, beispielsweise einem Schrumpfschlauch, bestehen, das den Gelenkbereich umgibt.

Mit Vorteil besteht der ringförmige Körper aus einem verformbaren Material, beispielsweise aus einer Silikon- oder einer Bleiverbindung. Durch das radiale Ausstellen der Spreizlappen beim Setzvorgang wird das freie Vorlumen im Bereich des plastischen Gelenks verkleinert. Bei der daraus resultierenden plastischen Verformung des ringförmigen Körpers wird ein Teil des Volumens des Materials aus der ringförmigen Nut gepresst. Der verdrängte Teil des ringförmigen Körpers überragt den Aussenumfang der Spreizhülse und stützt sich an der Bohrlochwand ab. Auf diese Weise können auch weitere Freiräume wenigstens teilweise ausgefüllt werden, die im Anschluss an das plastische Gelenk zwischen dem Aussenumfang der Spreizhülse und der Borhlochwandung freibleiben.

Während die erfindungsgemässe Massnahme, die radial in der Spreizhülse umlaufende Nut, die ein plastisches Gelenk für die radial ausstellbaren Spreizlappen bildet, mit einem ringförmigen Element zu bestücken, bei allen Hinterschnittdübeln der gattungsgemässen Art zur Anwendung kommen kann, bietet sich die Massnahme insbesondere bei selbstschneidenden Hinterschnittsystems an. Infolge der beim selbsttätigen Erstellen der Hinterschneidung auftretenden Kräfte kann der Untergrund insbesondere im Übergangsbereich von der Bohrlochwand zur Hinterschneidung eine geringfügig reduziert Stabilität aufweisen. Der im plastischen Gelenk vorgesehene ringförmige Körper stützt den Übergangsbereich zusätzlich ab und erhöht dadurch die Leistungsfähigkeit des gesetzten selbstschneidenden Hinterschnittdübels.

Im folgenden wird die Erfindung unter Bezugnahme auf in den Figuren dargestellte Ausführungsbeispiele näher erläutert. Es zeigen in nicht massstabsgetreuer, schematischer Darstellung:
- Fig. 1: einen Axialschnitt eines ersten Ausführungsbeispiels des erfindungsgemässen Hinterschnittdübels;
- Fig. 2: eine Draufsicht des ringförmigen Körpers aus Fig. 1;
- Fig. 3: ein Axialschnitt des ringförmigen Körpers aus Fig. 1; und
- Fig. 4: ein zweites Ausführungsbeispiels des Hinterschnittdübels in einer Darstellung gemäss Fig. 1.

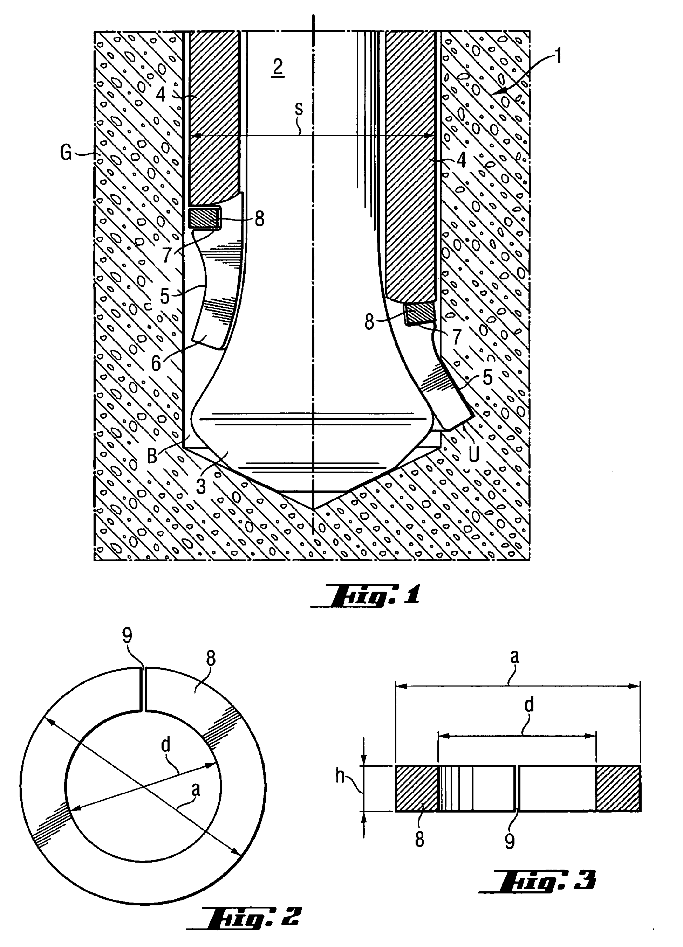

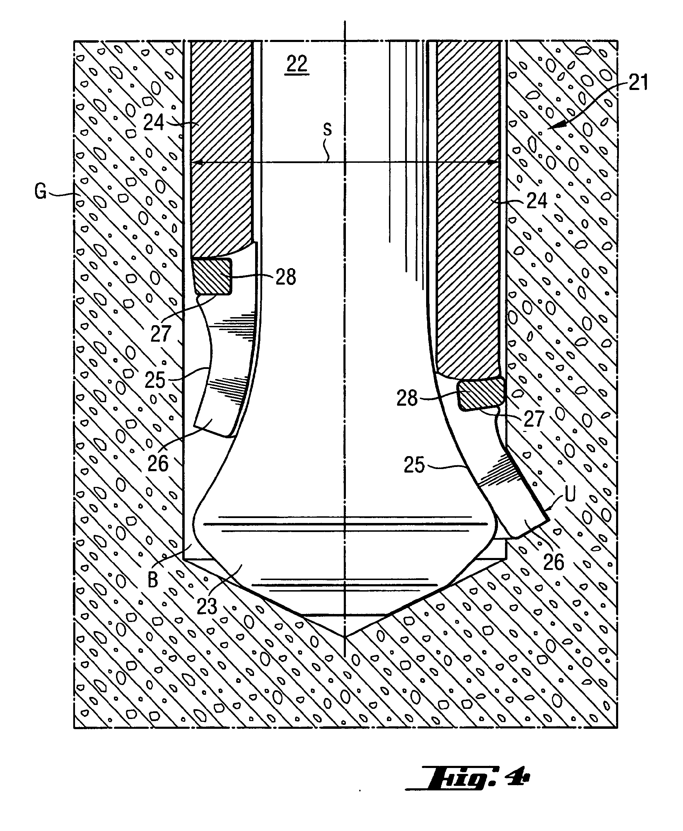

In Fig. 1 und 4 zeigen die linken Hälften der Darstellungen die Ausführungsbeispiele des erfindungsgemässen Hinterschnittdübels jeweils in der Ausgangsstellung. Die rechten Hälften der Darstellungen zeigen die Hinterschnittdübel im verankerten Zustand mit radial ausgestellten Spreizlappen. Der in Fig. 1 dargestellte Hinterschnittdübel trägt gesamthaft das Bezugszeichen 1. Der Hinterschnittdübel 1 ist in eine Bohrung B im Untergrund G, beispielsweise in Beton, eingesetzt. Er umfasst eine Ankerstange 2, die an ihrem einen, in Gebrauchsstellung rückwärtigen Ende ein Lastangriffsmittel, beispielsweise ein Aussen- oder ein Innengewinde aufweist. Am gegenüberliegenden, vorderen Ende ist die Ankerstange 2 mit einem Kopfteil 3 versehen, dessen Aussendurchmesser sich zum freien Ende hin etwa konus- oder trompetenförmig vergrössert. Auf der Ankerstange ist eine Spreizhülse 4 axial verschieblich angeordnet. Die Spreizhülse 4 ist mit einer Zentralbohrung ausgestattet, durch welche die Ankerstange 2 geführt ist. An ihrem dem Kopfteil 3 zugewandten Bereich weist die Spreizhülse 4 einstückig angeformte Spreizlappen 5 auf, die durch im wesentlichen axial verlaufende Schlitze 6 voneinander getrennt sind. Die Spreizlappen 5 erstrecken sich von einem plastischen Gelenk, das durch eine im wesentlichen radial umlaufende Nut 7an der Umfangsfläche der Spreizhülse 4 gebildet ist, zum Kopfteil 3 der Ankerstange 2. Gemäss der Erfindung ist in der radial umlaufenden Nut 7 ein ringförmiger Körper 8 angeordnet. Der ringförmige Körper 8 ist derart bemessen, dass er beim Auftreiben der Spreizhülse 4 auf das Kopfteil 3 der Ankerstange 2 das radiale Ausstellen der Spreizlappen 5 nicht behindert. Im verankerten Zustand des Hinterschnittdübels mit in die Hinterschneidung U ausgestellten Spreizlappen 5 füllt der ringförmige Körper 8 die radial umlaufende Nut 7 weitgehend aus.

Fig. 2 und 3 zeigen den ringförmigen Körper 8. Zur Vereinfachung der Montage weist der ringförmige Körper 8 entlang seines Umfangs vorzugsweise eine Trennstelle 9 auf. Der Aussendurchmesser a des ringförmigen Körpers stimmt weitgehend mit dem grössten Aussendurchmesser s der Spreizhülse 4 (Fig. 1) überein und ist vorzugsweise derart bemessen, dass gilt gilt 0,7 · s ≤ a ≤ 1,2 · s, vorzugsweise 0,8 · s ≤ a ≤ 1,1 · s. Wird der Aussendurchmesser a des ringförmigen Körpers 8 grösser gewählt als der grösste Aussendurchmesser s der Spreizhülse 4, ergibt sich beim Einschieben des Hinterschnittdübels in die Bohrung B eine Klemmwirkung, die beispielsweise bei der Überkopfmontage als Montagesicherung wirkt. Die axiale Höhe h des ringförmigen Körpers 8 ist im wesentlichen auf die Breite der radial umlaufenden Nut 4 abgestimmt. Vorzugsweise gilt für die axiale Höhe die Beziehung 0,05 · s ≤ h ≤ 1,5 s, vorzugsweise 0,1 · s ≤ h ≤ 0,8 · s. Für den Innendurchmesser d des ringförmigen Körpers 8 gilt 0,5 · s ≤ d ≤ 0,9 · s. Dabei bezeichnet s jedesmal den grössten Aussendurchmesser der Spreizhülse 4 (Fig. 1). Der ringförmige Körper 8 kann aus Kunststoff oder aus Metall bestehen. Er muss nicht notwendigerweise einstückig sein sondern kann auch segmentiert ausgebildet sein.

Fig. 4 zeigt eine Variante des erfindungsgemässen Hinterschnittdübels 21 mit einem ringförmigen Körper 28, der aus einem plastisch deformierbaren Material, beispielsweise aus einer Silikonverbindung oder aus Blei, besteht. Die Darstellung entspricht weitgehend der Darstellung in Fig. 1. Gleiche Elemente des Hinterschnittdübels 21 tragen jeweils ein um die Zahl 20 grösseres Bezugszeichen. Wie aus der linken Hälfte der Darstellung ersichtlich ist, füllt der ringförmige Körper 28 die radial umlaufende Nut 27 in der Umfangsfläche der Spreizhülse 24 bereits im Ausgangszustand vollständig aus. Zur Verankerung des Hinterschnittdübels 21 in einem Bohrloch B im Untergrund wird die Spreizhülse 24 auf das sich erweiternde Kopfteil 23 der Ankerstange 22 aufgetrieben. Dabei werden die Spreizlappen 25 radial in die Hinterschneidung U im Bereich des Grunds des Bohrlochs B ausgestellt. Im Fall eines selbsthinterschneidenden Systems wird die Spreizhülse 24 beispielsweise während des Auftreibens auf das Kopfteil 23 rotiert. Dabei erzeugen die radial ausgestellten Spreizlappen 25 selbsttätig die Hinterschneidung U. Durch das radiale Ausstellen der Spreizlappen 25 wird das Volumen der umlaufenden Nut 27 verringert. Wie in der rechten Hälfte der Fig. 4 angedeutet, ist der ringförmige Körper 28 soweit plastisch verformt, dass ein Teil seines Umfangs aus der umlaufenden Nut 27 ragt und den grössten Aussendurchmesser s der Spreizhülse 24 überragt. Der aus der Nut ragende Abschnitt des ringförmige Körpers 28 stützt die Bohrlochwandung im Übergangsbereich zur Hinterschneidung U ab. Dadurch wird das Befestigungssystem zusätzlich versteift und die Leistungsfähigkeit des Hinterschnittdübels 21 wird erhöht.

## Patentansprüche

1. Hinterschnittdübel mit einer Ankerstange (2; 22), die an ihrem einen Längsende mit Lastangriffsmitteln ausgestattet ist und am gegenüberliegenden Längsende ein Kopfteil (3; 23) aufweist, dessen Aussendurchmesser sich zum freien Ende der Ankerstange hin vergrössert, und einer Spreizhülse (4; 24), die eine Zentralbohrung für die Ankerstange (2; 22) und durch Längsschlitze (6; 26) voneinander getrennte Spreizlappen (5; 25) aufweist, die sich von einer radial umlaufenden Nut (7; 27) zum Kopfteil (3; 23) erstrecken und durch Auftreiben der Spreizhülse (4; 24) auf das Kopfteil (3; 23) radial ausstellbar sind, wobei in der radial umlaufenden Nut (7; 27) ein im wesentlichen ringförmiger Körper (8; 28) angeordnet ist, **dadurch gekennzeichnet dass** die Spreiglappen (5;25) einstuckig an der Spreighülse (4;24) angeformt sind und der ringförmige Körper (8;28) bei ausgestellten Spreizlappen (5; 25) die radial umlaufende Nut (7; 27) im wesentlichen ausfüllt.

2. Hinterschnittdübel nach Anspruch 1, **dadurch gekennzeichnet, dass** für den Aussendurchmesser (a) des ringförmigen Körpers (8; 28) gilt 0,7 · s ≤ a ≤ 1,2 · s, vorzugsweise 0,8 · s ≤ a ≤ 1,1 · s, wobei s für den grössten Aussendurchmesser der Spreizhülse (4; 24) steht.

3. Hinterschnittdübel nach Anspruch 1 oder 2, **dadurch gekennzeichnet, dass** der ringförmige Körper (8; 28) eine axiale Höhe (h) aufweist, für die gilt 0,05 · s ≤ h ≤ 1,5 · s, vorzugsweise 0,1 · s ≤ h ≤ 0,8 · s, wobei s für den grössten Aussendurchmesser der Spreizhülse (4; 24) steht.

4. Hinterschnittdübel nach einem der vorangehenden Ansprüche, **dadurch gekennzeichnet, dass** der ringförmige Körper (8; 28) eine Dicke aufweist, die im wesentlichen der radialen Tiefe der umlaufenden Nut (7; 27) entspricht, wobei der ringförmige Körper (8; 28) vorzugsweise einen Innendurchmesser (d) aufweist, für den gilt 0,5 · s ≤ d ≤ 0,9 · s, wobei s für den grössten Aussendurchmesser der Spreizhülse (4; 24) steht.

5. Hinterschnittdübel nach einem der vorangehenden Ansprüche, **dadurch gekennzeichnet, dass** der ringförmige Körper (8; 28) aus Kunststoff oder aus Metall besteht.

6. Hinterschnittdübel nach einem der vorangehenden Ansprüche, **dadurch gekennzeichnet, dass** der ringförmige Körper (8) entlang seines Umfangs eine Trennstelle (9) aufweist und vorzugsweise radial elastisch ausgebildet ist.

7. Hinterschnittdübel nach einem der vorangehenden Ansprüche, **dadurch gekennzeichnet, dass** der ringförmige Körper segmentiert ausgebildet ist.

8. Hinterschnittdübel nach einem der vorangehenden Ansprüche, **dadurch gekennzeichnet, dass** der ringförmige Körper (28) aus einem verformbaren Material, beispielsweise aus einer Silikon- oder einer Bleiverbindung, besteht.

9. Hinterschnittdübel nach einem der vorangehenden Ansprüche, **dadurch gekennzeichnet, dass** die Ankerstange (2; 22) und die Spreizhülse (4; 24) Bestandteile eines selbstschneidenden Hinterschnittsystems sind.

## Claims

1. Undercut anchor having an anchoring rod (2; 22) which at one longitudinal extremity is provided with load application means and at the opposite longitudinal extremity features a head portion (3; 23) the external diameter of which increases in the direction of the free extremity of the anchoring rod, and having an expansion sleeve (4; 24) which features a central bore for the anchoring rod (2; 22) and expansion tabs (5; 25) which are separated from one another by elongate slots (6; 26) extending from an all-round radial groove (7; 27) as far as the head portion (3; 23) and which are adapted to be deployed radially by driving the expansion sleeve (4; 24) against the head portion (3; 23), a substantially annular body (8; 28) being arranged in the all-round radial groove (7; 27), **characterised in that** the expansion tabs (5; 25) are moulded integrally on the expansion sleeve (4; 24), and the annular body (8; 28) substantially fills the all-round radial groove (7; 27) when the expansion tabs (5; 25) are in the deployed position.

2. Undercut anchor according to claim 1, **characterised in that** in respect of the external diameter (a) of the annular body (8; 28): 0.7 • s ≤ a ≤ 1.2 s, preferably 0.8 • s ≤ a ≤ 1.1 • s, where s stands for the maximum external diameter of the expansion sleeve (4; 24).

3. Undercut anchor according to claim 1 or 2, **characterised in that** the annular body (8; 28) has an axial height (h) in respect of which: 0.05 • s ≤ h ≤ 1.5 • s, preferably 0.1 • s ≤ h ≤ 0.8 • s, where s stands for the maximum external diameter of the expansion sleeve (4; 24).

4. Undercut anchor according to any one of the preceding claims, **characterised in that** the annular body (8; 28) has substantially the same thickness as the radial depth of the all-round groove (7; 27), the annular body (8; 28) preferably having an internal diameter (d) in respect of which: 0.5 • s ≤ d ≤ 0.9 • s, where s stands for the maximum external diameter of the expansion sleeve (4; 24).

5. Undercut anchor according to any one of the preceding claims, **characterised in that** the annular body (8; 28) is made of plastic or metal.

6. Undercut anchor according to any one of the preceding claims, **characterised in that** the annular body (8) features a separation point (9) along its circumference and is preferably designed to be radially flexible.

7. Undercut anchor according to any one of the preceding claims, **characterised in that** the annular body has a segmented design.

8. Undercut anchor according to any one of the preceding claims, **characterised in that** the annular body (28) is made from a deformable material, for example a silicone compound or lead compound.

9. Undercut anchor according to any one of the preceding claims, **characterised in that** the anchoring rod (2; 22) and the expansion sleeve (4; 24) are components of a self-tapping undercut system.

## Revendications

1. Cheville à contre-dépouille comprenant une tige d'ancrage (2 ; 22), qui est munie, à l'une de ses extrémités longitudinales, de moyens d'application de charge et comporte, à l'extrémité longitudinale opposée, une partie de tête (3 ; 23) dont le diamètre extérieur s'accroît vers l'extrémité libre de la tige d'ancrage, et comprenant un manchon expansible (4 ; 24) pourvu d'un trou central pour la tige d'ancrage (2 ; 22) et de pattes expansibles (5 ; 25), lesquelles sont séparées les unes des autres par des fentes longitudinales (6 ; 26), s'étendent à partir d'une rainure périphérique radiale (7 ; 27) vers la partie de tête (3 ; 23) et sont déployables radialement lorsque le manchon expansible (4 ; 24) monte sur la partie de tête (3 ; 23), dans la rainure périphérique radiale (7 ; 27) étant disposé un corps sensiblement annulaire (8 ; 28), **caractérisée en ce que** les pattes expansibles (5 ; 25) sont façonnées d'un seul tenant avec le manchon expansible (4 ; 24), et, lorsque les pattes expansibles (5 ; 25) sont déployées, le corps annulaire (8 ; 28) emplit sensiblement la rainure périphérique radiale (7 ; 27).

2. Cheville à contre-dépouille selon la revendication 1, **caractérisée en ce que**, pour le diamètre extérieur (a) du corps annulaire (8 ; 28), on a 0,7 - s ≤ a ≤ 1,2 • s, de préférence 0,8 · s ≤ a ≤ 1,1 • s, s correspondant au diamètre extérieur maximal du manchon expansible (4 ; 24).

3. Cheville à contre-dépouille selon la revendication 1 ou 2, **caractérisée en ce que** le corps annulaire (8 ; 28) présente une hauteur axiale (h) pour laquelle on a 0,05 • s ≤ h ≤ 1,5 • s, de préférence 0,1 • s ≤ h ≤ 0,8 • s, s correspondant au diamètre extérieur maximal du manchon expansible (4 ; 24).

4. Cheville à contre-dépouille selon une des revendications précédentes, **caractérisée en ce que** le corps annulaire (8 ; 28) présente une épaisseur qui correspond sensiblement à la profondeur radiale de la rainure périphérique (7 ; 27), le corps annulaire (8 ; 28) présentant de préférence un diamètre intérieur (d) pour lequel on a 0,5 - s ≤ d ≤ 0,9 - s, s correspondant au diamètre extérieur maximal du manchon expansible (4 ; 24).

5. Cheville à contre-dépouille selon une des revendications précédentes, **caractérisée en ce que** le corps annulaire (8 ; 28) est constitué de matière plastique ou de métal.

6. Cheville à contre-dépouille selon une des revendications précédentes, **caractérisée en ce que** le corps annulaire (8) comporte, le long de sa périphérie, un point de séparation (9) et est de préférence conformé de manière radialement élastique.

7. Cheville à contre-dépouille selon une des revendications précédentes, **caractérisée en ce que** le corps annulaire est conformé de manière segmentée.

8. Cheville à contre-dépouille selon une des revendications précédentes, **caractérisée en ce que** le corps annulaire (28) est constitué d'un matériau déformable, par exemple d'un composé de silicone ou de plomb.

9. Cheville à contre-dépouille selon une des revendications précédentes, **caractérisée en ce que** la tige d'ancrage (2 ; 22) et le manchon expansible (4 ; 24) sont des éléments constitutifs d'un système à contre-dépouille autotaraudeur.
